(19) Europäisches Patentamt
European Patent Office
Office européen des brevets

(11) **EP 3 929 772 A1**

(12) **EUROPEAN PATENT APPLICATION**

(43) Date of publication:
**29.12.2021 Bulletin 2021/52**

(51) Int Cl.:
***G06F 16/901*** (2019.01)

(21) Application number: **20181457.1**

(22) Date of filing: **22.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Kharlamov, Evgeny**
**81829 Muenchen (DE)**

(54) **COMPUTER-IMPLEMENTED METHOD FOR KEYWORD SEARCH IN A KNOWLEDGE GRAPH**

(57)     Computer-implemented method (100) for keyword search in a data set (Q), wherein data (q) of the data set (Q) is represented by a knowledge graph (KG), wherein the knowledge graph (KG) comprises vertices (v) representing entities (v) of the data set (Q) and edges (e) representing relations between said entities (v), the method (100) comprising the steps of providing (110) a set of subgraphs (G') of the knowledge graph (KG) connecting at least two entities (v) of a keyword query; computing (120) the relevance (rel(G')) of each subgraph (G') based on both a relevance ($rel_D(G')$) of each subgraph (G') to the data set (Q), referred to as data relevance ($rel_D(G')$), and a relevance ($rel_I(G')$) of the entities (v) of each subgraph (G') to each other, referred to as intra relevance ($rel_I(G')$), and ranking (130) the subgraphs (G') of the set of subgraphs (G') according to their relevance (rel(G')).

Fig. 1

EP 3 929 772 A1

**Description**

Background

The disclosure concerns a computer-implemented method for keyword search in a data set, wherein data of the data set is represented by a knowledge graph.

Further, the disclosure concerns a system for keyword search in a data set and a computer program for keyword search in a data set.

A knowledge graph, KG, is a graph where vertices are entities interconnected with binary relations and annotated with types and data values. Increasingly many knowledge graphs have been developed for various domains. Knowledge graphs support a wide range of tasks from enterprise data integration to intelligent search.

An important task for knowledge graph based applications is to extract subgraphs that are relevant to given sets of vertices, also referred to as relationship subgraphs, RSGs. For example, a set of vertices in a knowledge graph can be selected during keyword search, where a user queries the knowledge graph by posing a set of keywords and the system matches them to entities of the knowledge graph, finds relationship subgraphs of the knowledge graph that relate these entities, and returns them as answers.

For effective enrichment, the subgraph should be relevant to the context, namely the content of the data set. Therefore, the task of the disclosure is to provide a measure for the relevance of the subgraph.

Disclosure

This is achieved by the system and method according to the independent claims.

An embodiment refers to a computer-implemented method for keyword search in a data set, wherein data of the data set is represented by a knowledge graph, wherein the knowledge graph comprises vertices representing entities of the data set and edges representing relations between said entities, the method comprising the steps of:

> providing a set of subgraphs of the knowledge graph connecting at least two entities of a keyword query;
> computing a relevance of each subgraph based on both a relevance of each subgraph to the data set, referred to as data relevance, and a relevance of the entities of each subgraph to each other, referred to as intra relevance, and ranking the subgraphs of the set of subgraphs according to their relevance.

Advantageously, the relevance of a subgraph is considered from two perspectives: the relevance of the subgraph to the data set and the relevance of elements, namely the entities, of the subgraph to each other.

According to a preferred embodiment of the method, the method comprises further a step of calculating the data relevance and/or a step of calculating intra relevance.

According to a preferred embodiment of the method, the data relevance of a subgraph to the data set is calculated based on a relatedness between pairs of entities of the data set and entities of the subgraph.

According to a preferred embodiment of the method, the relatedness between an entity of the data set and an entity of the subgraph is computed based on a similarity of the classes, in particular a type of the classes, of said entities.

Each entity of the data set and each entity of the subgraph is annotated with its class type which denoted by $\text{type}(v) \in \mathbb{T}$, wherein $\mathbb{T}$ is the set of all classes, e.g. given in some catalog.

To compute the relatedness $r(v_i, v_j)$ between two entities $v_i, v_j$, the entities $v_i, v_j$ are represented as two vectors $\vec{v_i}, \vec{v_j}$ in a vector space which is given by a $|\mathbb{T}|$-dimensional vector space, where the l-th dimension corresponds to class $t_l \in \mathbb{T}$ and the cosine similarity of the two vectors $\vec{v_i}, \vec{v_j}$ in this space is calculated:

$$r(v_i, v_j) = \cos(\vec{v_i}, \vec{v_j}).$$

For the vectors $\vec{v_i}, \vec{v_j}$, the class types and also the class types of their neighbors in the subgraph is considered. By considering the class type of the neighbors implicit relatedness can be taken into consideration.

Specifically, for $\vec{v_{i,l}}$, which is the l-th dimension of $\vec{v_i}$, the following is defined

$$\vec{v_{i,l}} = \begin{cases} 1 & \text{if } t_l = \text{type}(v_i), \\ \text{tf} - \text{ief}(t_l | v_i) & \text{otherwise,} \end{cases}$$

where tf-ief($t_l|v_i$) $\in$ [0, 1] denotes the type frequency-inverse entity frequency of $t_l$ with regrad to $v_i$. It adapts the well-known term frequency-inverse document frequency in information retrieval to knowledge graphs:

$$tf - \text{ief}(t_l|v_i) = tf(t_l|v_i) * \text{ief}(t_l),$$

where

$$tf(t_l|v_i) = \frac{|\{v \in \text{NBR}(v_i): \text{type}(v) = t_l\}|}{\text{NBR}(v_i)},$$

and

$$\text{ief}(t_l) = \frac{\text{ic}(t_l)}{\log|\mathbb{V}|}$$

where tf($t_l|v_i$) $\in$ [0, 1] calculates the proportion of ti's instances in $v_i$'s neighbors, and ief($t_l$) $\in$ [0, 1] calculates the normalized information content of $t_l$. The standard definition of information content is given by

$$\text{ic}(t_l) = -\log\frac{|v \in \mathbb{V}: t_l \in \text{TYPS}(v)|}{|\mathbb{V}|}.$$

The information content is inversely proportional to the logarithm of the number of instances of $t_l$. In this case TYPS(v) denotes a set of classes consisting of type(v) and its ancestors in the class hierarchy of $\mathbb{T}$. In other words, subsumption-based reasoning is performed, to obtain implicit entity types from the hierarchy.

According to a preferred embodiment of the method, wherein the data relevance is computed by calculating the average relatedness between pairs of entities of the data set and entities of the subgraph, wherein the average relatedness is given by

$$\text{rel}_D(G') = \frac{1}{|Q| * |V_{G'}|} \sum_{v_i \in Q, v_j \in V_{G'}} r(v_i, v_j).$$

Formally, Q denotes the set of entities in the knowledge graph that are mentioned in the data set and $V_{G'}$ denotes the entitis of the subgraph. The data relevance is computed by calculating the average relatedness between pairs of entities of the data set and the subgraph.

According to a preferred embodiment of the method, the intra relevance of the entities of a subgraph to each other is calculated based on a similarity between pairs of entities in the subgraph.

According to a preferred embodiment of the method wherein the similarity between a pair of entities, given by sim($v_i$, $v_j$), is computed based on a similarity of the classes, in particular a type of the classes, of said entities. One possible way for computing the similiarity sim(vi, vj) is disclosed for example by Ganggao Zhu and Carlos Angel Iglesias: Computing semantic similarity of concepts in knowledge graphs; IEEE Trans. Knowl. Data Eng., 29(1):72-85, 2017. In particular, the similarity between a class type of one entity of the pair of entities and a class type of the other entity of the pair of entities based on the relative positions of the classes in a class hierarchy. Two classes are similar if they are close together and are commonly subsumed under a specific class in the hierarchy. The similiarity sim(vi, vj) can be computed according to the following formula:

$$\text{sim}(v_i, v_j) = \frac{1}{1 + \text{len}(\text{type}(v_i), \text{type}(v_j)) \cdot k^{\text{ic}(\text{lcs}(\text{type}(v_i), \text{type}(v_j)))}}$$

wherein len(type($v_i$), type($v_j$)) is the length of a shortest path between the class type of entity $v_i$ and type class type of entity $v_j$ in the class hierarchy, k $\in$ (0, 1] is a parameter to tune, and ic(lcs(type($v_i$), type($v_j$))) is the information content of the least common subsumer, lcs, of class type($v_i$) and class type($v_j$) in the class hierarchy. The least common subsumer of two classes is their lowest-level shared ancestor in the class hierarchy.

According to a preferred embodiment of the method, the intra relevance is computed by calculating the average similarity between pairs of entities in the subgraph, wherein the average similarity is given by

$$\text{rel}_I(G') = \frac{1}{\binom{|V_{G'}|}{2}} \sum_{v_i, v_j \in V_{G'}, v_i \neq v_j} \text{sim}(v_i, v_j).$$

According to a preferred embodiment of the method, the relevance of each subgraph is computed by

$$\text{rel}(G') = (1 - \alpha) \cdot \text{rel}_D(G') + \alpha \cdot \text{rel}_I(G'),$$

wherein rel(G') denotes the relevance of a subgraph, $\text{rel}_D$(G') denotes the data relevance of a subgraph, $\text{rel}_I$(G') denotes the intra relevance of a subgraph and $\alpha \in [0, 1]$ is a parameter to tune the relative importance of the data relevance $\text{rel}_D$(G') and the intra relevance.

Further embodiments refer to a system for keyword search in a data set, wherein the system is configured to carry out the computer-implemented method according to any of the embodiments.

Further embodiments refer to a computer program, wherein the computer program comprises computer readable instructions that when executed by a computer, in particular a computer of a system according to the embodiment, cause the computer to execute a method according to any of the embodiments.

Further embodiments refer to the use of a method acoording to the embodiments and/or a system acoording to the embodiments in knowledge graph based text enrichment where words or phrases in documents such as news articles or reports are annotated with types from a given background knowledge graph, linked to vertices of the knowledge graph. To effectively enrich a document, a subgraph should be relevant to the document content.

Previous methods compute the relevance of a subgraph to a document using a simple word-based measure. This is for example disclosed in Viswanathan and Krish namurthi Ilango: Ranking semantic relationships between two entities using personalization in context specification; Inf. Sci., 207:35-49, 2012.

According to the disclosed method, the enrichment of documents is based on entity-based relevance and hence ontological knowledge can be exploited.

Further advantageous embodiments are derived from the following description and the drawings. In the drawings

Fig. 1 depicts a schematic view of a computer implemented method for keyword search according to an embodiment;

Fig. 2 depicts a schematic view of a knowledge graph according to an embodiment, and

Fig. 3 depicts a schematic view of a system for keyword search according to an embodiment.

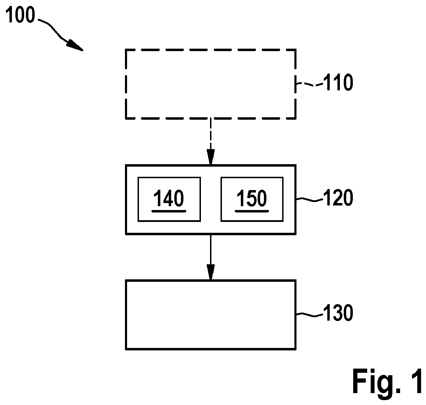

Figure 1 refers to a computer implemented method 100 for keyword search in a data set Q. Data q of the data Q set is represented by a knowledge graph KG, wherein the knowledge graph KG comprises vertices v representing entities of the data set Q and edges e representing relations between said entities.

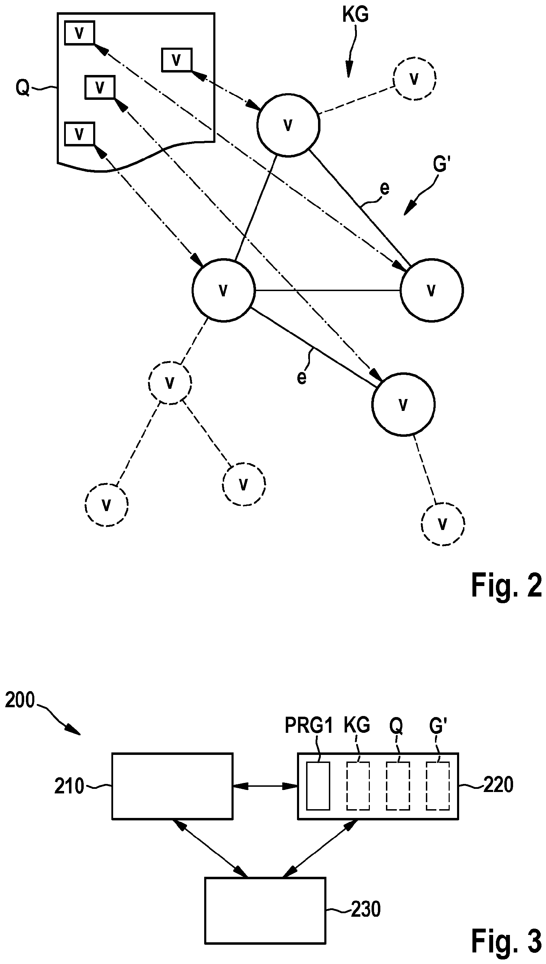

An exemplary presentation of a knowledge graph KG is given by figure 2. The knowledge graph KG can be used for graph-based knowledge representation by describing entities, for example real world entities, and their relations. The data q of the data set Q is represented in the knowledge graph KG. The knowledge graph can comprise additional information in addition to the data q of the data set Q. The data set Q istself is for example a text document comprising words or phrases. The documents is for example a news article or report which is annotated with types from a given background knowledge graph, linked to vertices of the knowledge graph. Each entity v is annotated with its type which is a class defined in an ontology, denoted by type $(v) \in \mathbb{T}$. Classes in $\mathbb{T}$ constitute a subsumption hierarchy.

According to the disclosed embodiment the method 100 comprises the steps of:

providing 110 a set of subgraphs G' of the knowledge graph KG connecting at least two entities v of a keyword query;

computing 120 the relevance rel(G') of each subgraph G' based on both a relevance $\text{rel}_D$(G') of each subgraph G' to the data set Q, referred to as data relevance $\text{rel}_D$(G'), and a relevance $\text{rel}_I$(G') of the entities v of each subgraph to each other, referred to as intra relevance $\text{rel}_I$(G'), and

ranking 130 the subgraphs G' of the set of subgraphs G' according to their relevance rel(G').

According to a preferred embodiment of the method 100, the method 100 comprises further a step 140 of calculating the data relevance $rel_D(G')$ of a subgraph G' to the data set Q.

According to a preferred embodiment of the method 100, the data relevance $rel_D(G')$ of a subgraph G' to the data set Q is calculated 140 based on a relatedness between pairs of entities v of the data set Q and entities v of the subgraph G'.

According to a preferred embodiment of the method, the relatedness between an entity v of the data set Q and an entity v of the subgraph G' is computed based on a similarity of the classes, in particular a type of the classes, of said entities v.

Each entity v of the data set Q and each entity v of the subgraph G' is annotated with its class type, which is denoted by type $(v) \in \mathbb{T}$, wherein $\mathbb{T}$ is the set of all classes, e.g. given in some catalog.

To compute the relatedness $r(v_i, v_j)$ between two entities $v_i$, $v_j$, the entities $v_i$, $v_j$ are represented as two vectors $\vec{v_i}, \vec{v_j}$ in a vector space which is given by a $|\mathbb{T}|$-dimensional vector space, where the l-th dimension corresponds to class $t_l \in \mathbb{T}$ and the cosine similarity of the two vectors $\vec{v_i}, \vec{v_j}$ in this space is calculated:

$$r(v_i, v_j) = \cos(\vec{v_i}, \vec{v_j}).$$

For the vectors $\vec{v_i}, \vec{v_j}$, the class types and also the class types of their neighbors in the subgraph G' is considered. By considering the class type of the neighbors implicit relatedness can be taken into consideration. A neighbor of vertex v is adjacent to v by an edge. $NBR(v) \subseteq V$ represent all the neighbors of an entity v in the knowledge graph KG. The distance between two vertices u and v, denoted by dist(u, v), is the length of a shortest path connecting u and v in G, or $+\infty$ if no such path exists.

Specifically, for $\vec{v_{i,l}}$, which is the l-th dimension of $\vec{v_i}$, the following is defined

$$\vec{v_{i,l}} = \begin{cases} 1 & \text{if } t_l = \text{type}(v_i), \\ \text{tf} - \text{ief}(t_l|v_i) & \text{otherwise,} \end{cases}$$

where tf-ief$(t_l|v_i) \in [0, 1]$ denotes the type frequency-inverse entity frequency of $t_l$ with regrad to $v_i$. It adapts the well-known term frequency-inverse document frequency in information retrieval to knowledge graphs:

$$\text{tf} - \text{ief}(t_l|v_i) = \text{tf}(t_l|v_i) * \text{ief}(t_l),$$

where

$$\text{tf}(t_l|v_i) = \frac{|\{v \in NBR(v_i): \text{type}(v) = t_l\}|}{NBR(v_i)},$$

and

$$\text{ief}(t_l) = \frac{\text{ic}(t_l)}{\log|\mathbb{V}|}$$

where tf$(t_l|v_i) \in [0, 1]$ calculates the proportion of ti's instances in $v_i$'s neighbors, and ief$(t_l) \in [0, 1]$ calculates the normalized information content of $t_l$. The standard definition of information content is given by

$$\text{ic}(t_l) = -\log \frac{|v \in \mathbb{V}: t_l \in \text{TYPS}(v)|}{|\mathbb{V}|}.$$

The information content is inversely proportional to the logarithm of the number of instances of $t_i$. In this case

TYPS(v) denotes a set of classes consisting of type(v) and its ancestors in the class hierarchy of $\mathbb{T}$. In other words, subsumption-based reasoning is performed, to obtain implicit entity types from the hierarchy.

According to a preferred embodiment of the method, wherein the data relevance $rel_D(G')$ is computed by calculating the average relatedness between pairs of entities v of the data set Q and entities v of the subgraph G', wherein the average relatedness is given by

$$rel_D(G') = \frac{1}{|Q| * |V_{G'}|} \sum_{v_i \in Q, v_j \in V_{G'}} r(v_i, v_j).$$

Formally, Q denotes the set of entities v in the knowledge graph that are mentioned in the data set Q and $V_{G'}$ denotes the entitis of the subgraph G'. The data relevance $rel_D(G')$ is computed by calculating the average relatedness between pairs of entities v of the data set Q and the subgraph G'.

According to a preferred embodiment of the method 100, the method 100 comprises further a step 150 of calculating the intra relevance $rel_I(G')$ of the entities v of each subgraph G' to each other.

According to a preferred embodiment of the method 100, the intra relevance $rel_I(G')$ of the entities v of a subgraph G' to each other is calculated 150 based on a similarity between pairs of entities v in the subgraph G'.

According to a preferred embodiment of the method, wherein the similarity between a pair of entities v, given by $sim(v_i, v_j)$, is computed based on a similarity of the classes, in particular a type of the classes, of said entities $v_i$, $v_j$. One possible way for computing the similiarity sim(vi, vj) is disclosed for example by Ganggao Zhu and Carlos Angel Iglesias: Computing semantic similarity of concepts in knowledge graphs; IEEE Trans. Knowl. Data Eng., 29(1):72-85, 2017. In particular, the similarity between a class type of one entity $v_i$ of the pair of entities and a class type of the other entity $v_j$ of the pair of entities based on the relative positions of the classes in a class hierarchy. Two classes are similar if they are close together and are commonly subsumed under a specific class in the hierarchy. The similiarity sim(vi, vj) can be computed according to the following formula:

$$sim(v_i, v_j) = \frac{1}{1 + len(type(v_i), type(v_j)) \cdot k^{ic(lcs(type(v_i), type(v_j)))}}$$

wherein $len(type(v_i), type(v_j))$ is the length of a shortest path between the class type of entity $v_i$ and type class type of entity $v_j$ in the class hierarchy, $k \in (0, 1]$ is a parameter to tune, and $ic(lcs(type(v_i), type(v_j)))$ is the information content of the least common subsumer, lcs, of class $type(v_i)$ and class $type(v_j)$ in the class hierarchy. The least common subsumer of two classes is their lowest-level shared ancestor in the class hierarchy.

According to a preferred embodiment of the method 100, the intra relevance $rel_I(G')$ is computed by calculating the average similarity between pairs of entities v in the subgraph G', wherein the average similarity is given by

$$rel_I(G') = \frac{1}{\binom{|V_{G'}|}{2}} \sum_{v_i, v_j \in V_{G'}, v_i \neq v_j} sim(v_i, v_j).$$

According to a preferred embodiment of the method 100, the relevance of each subgraph G' is computed by

$$rel(G') = (1 - \alpha) \cdot rel_D(G') + \alpha \cdot rel_I(G'),$$

wherein rel(G') denotes the relevance of a subgraph G', $rel_D(G')$ denotes the data relevance of a subgraph G', $rel_I(G')$ denotes the intra relevance of a subgraph G' and $\alpha \in [0, 1]$ is a parameter to tune the relative importance of the data relevance $rel_D(G')$ and the intra relevance $rel_I(G')$.

Figure 3 depicts a schematic view of a system 200 for keyword search in a data set Q according to an embodiment.

The system 200 is configured to carry out at least one of the steps 110, 120, 130, 140, 150 of the method 100.

The system 200 comprises a computing unit 210, e.g. a microprocessor and/or microcontroller and/or programmable logic device, in particular FPGA, and/or application-specific integrated circuit, ASIC, and/or digital signal processor, DSP, and/or a combination thereof.

The system 200 comprises at least one storing unit 220. The storing unit 220 may further comprise a volatile memory, in particular random access memory (RAM), and/or a non-volatile memory, e.g. a flash EEPROM. The storing unit 220 contains at least one computer program PRG1 for the computing unit 210, which controls the execution of the method 100 for keyword search in a data set Q.

The system 200 may further comprise an interface unit 230 for receiving data constituting the knowledge graph KG and/or the data set Q and or the search query from at least one external data source. The data constituting the knowledge graph and/or the data set Q and or the search query can be stored in the storing unit 220 of the system or in a further, for example an external, storing unit.

A further embodiment refers to a computer program PRG 1. The computer program PRG 1 comprises computer readable instructions that when executed by a computer, in particular the computer 210 of the system 200 according to the embodiments, cause the computer to execute the method 100, in particular steps of the method 100 according to embodiments.

**Claims**

1. Computer-implemented method (100) for keyword search in a data set (Q), wherein data (q) of the data set (Q) is represented by a knowledge graph (KG), wherein the knowledge graph (KG) comprises vertices (v) representing entities (v) of the data set (Q) and edges (e) representing relations between said entities (v), the method (100) comprising the steps of providing (110) a set of subgraphs (G') of the knowledge graph (KG) connecting at least two entities (v) of a keyword query;
   computing (120) the relevance (rel(G')) of each subgraph (G') based on both a relevance ($rel_D$(G')) of each subgraph (G') to the data set (Q), referred to as data relevance ($rel_D$(G')), and a relevance ($rel_I$(G')) of the entities (v) of each subgraph (G') to each other, referred to as intra relevance ($rel_I$(G')), and ranking (130) the subgraphs (G') of the set of subgraphs (G') according to their relevance (rel(G')).

2. Computer-implemented method (100) according to claim 1, wherein the method (100) comprises further a step of calculating (140) the data relevance ($rel_D$(G')) and/or a step of calculating (150) intra relevance ($rel_I$(G')).

3. Computer-implemented method (100) according to any of the preceding claims, wherein the data relevance ($rel_D$(G')) of a subgraph (G') to the data set (Q) is calculated based on a relatedness (r) between pairs of entities (v) of the data set (Q) and entities (v) of the subgraph (G').

4. Computer-implemented method (100) according to claim 3, wherein the relatedness (r) between an entity (v) of the data set (Q) and an entity (v) of the subgraph (G') is computed based on a similarity of the classes, in particular a type of the classes, of said entities (v).

5. Computer-implemented method (100) according to any of the claims 3 and 4, wherein the data relevance ($rel_D$(G')) is computed by calculating the average relatedness (r) between pairs of entities (v) of the data set (Q) and entities (v) of the subgraph (G'), wherein the average relatedness (r) is given by

$$\mathrm{rel_D}(G') = \frac{1}{|Q| * |V_{G'}|} \sum_{v_i \in Q, v_j \in V_{G'}} \mathrm{r}(v_i, v_j).$$

6. Computer-implemented method (100) according to any of the preceding claims, wherein the intra relevance ($rel_I$(G')) of the entities (v) of a subgraph (G') to each other is calculated based on a similarity between pairs of entities (v) in the subgraph (G').

7. Computer-implemented method (100) according to claim 6, wherein the similarity between a pair of entities (v), given by $sim(v_i, v_j)$, is computed based on a similarity of the classes, in particular a type of the classes, of said entities (v).

8. Computer-implemented method (100) according to any of the claims 6 and 7, wherein the intra relevance ($rel_I$(G')) is computed by calculating the average similarity between pairs of entities (v) in the subgraph (G'), wherein the average similarity is given by

$$\text{rel}_I(G') = \frac{1}{\binom{|V_{G'}|}{2}} \sum_{v_i, v_j \in V_{G'}, v_i \neq v_j} \text{sim}(v_i, v_j).$$

9. Computer-implemented method (100) according to any of the preceding claims, wherein the relevance (rel(G')) of each subgraph (G') is computed by

$$\text{rel}(G') = (1 - \alpha) \cdot \text{rel}_D(G') + \alpha \cdot \text{rel}_I(G'),$$

wherein $\alpha \in [0, 1]$ is a parameter to tune the relative importance of the data relevance and the intra relevance (rel$_I$(G')).

10. System (200) for keyword search in a data set (Q), wherein data (q) of the data set (Q) is represented by a knowledge graph (KG), wherein the knowledge graph (KG) comprises vertices (v) representing entities (v) of the data set (Q) and edges (e) representing relations between said entities (v), wherein the system (200) is configured to carry out the computer-implemented method (100) according to any of the claims 1 to 9.

11. Computer program (PRG 1), wherein the computer program (PRG 1) comprises computer readable instructions that when executed by a computer, in particular a computer (210) of a system (200) according to claim 10, cause the computer to execute a method (100) according to any of the claims 1 to 9.

Fig. 1

KG

Q

G'

e

e

**Fig. 2**

200

210

PRG1 KG Q G'

220

230

**Fig. 3**

Europäisches
Patentamt

European
Patent Office

Office européen
des brevets

# EUROPEAN SEARCH REPORT

**Application Number**

EP 20 18 1457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG XIN ET AL: "Querying Knowledge Graphs with Natural Languages", 6 August 2019 (2019-08-06), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 30 - 46, XP047517145, ISBN: 978-3-319-10403-4 [retrieved on 2019-08-06] * abstract * * page 30, paragraph 1 - page 37, paragraph 2 * * page 39, paragraph 4 - page 42 * | 1-11 | INV. G06F16/901 |
| X | GHANBARPOUR ASIEH ET AL: "An Attribute-Specific Ranking Method Based on Language Models for Keyword Search over Graphs", IEEE TRANSACTIONS ON KNOWLEDGE AND DATA ENGINEERING, IEEE SERVICE CENTER, LOS ALAMITOS, CA, US, vol. 32, no. 1, 1 January 2020 (2020-01-01), pages 12-25, XP011760873, ISSN: 1041-4347, DOI: 10.1109/TKDE.2018.2879863 [retrieved on 2019-12-09] * page 12, paragraph 1 - page 17, paragraph 3 * | 1-11 | |

-----

-----

-/--

**TECHNICAL FIELDS SEARCHED (IPC)**

G06F

The present search report has been drawn up for all claims

| Place of search | Date of completion of the search | Examiner |
|---|---|---|
| The Hague | 22 September 2020 | Chinzer, Azzurra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 18 1457

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Jinsoo Lee ET AL: "An In-depth Comparison of Subgraph Isomorphism Algorithms in Graph Databases", Proceedings of the VLDB Endowment vol 6 no 2, 31 December 2012 (2012-12-31), XP055094835, DOI: 10.14778/2535568.2448946 Retrieved from the Internet: URL:http://www.vldb.org/pvldb/vol6/p133-han.pdf [retrieved on 2014-01-06] * the whole document * ----- | 1-11 | |

TECHNICAL FIELDS
SEARCHED      (IPC)

The present search report has been drawn up for all claims

| Place of search | Date of completion of the search | Examiner |
|---|---|---|
| The Hague | 22 September 2020 | Chinzer, Azzurra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GANGGAO ZHU ; CARLOS ANGEL IGLESIAS.** Computing semantic similarity of concepts in knowledge graphs. *IEEE Trans. Knowl. Data Eng.,* 2017, vol. 29 (1), 72-85

- **VISWANATHAN ; KRISH NAMURTHI ILANGO.** Ranking semantic relationships between two entities using personalization in context specification. *Inf. Sci.,* 2012, vol. 207, 35-49